(19) Europäisches Patentamt / European Patent Office / Office européen des brevets

(11) EP 2 453 221 A1

(12) DEMANDE DE BREVET EUROPEEN

(43) Date de publication:
16.05.2012 Bulletin 2012/20

(51) Int Cl.:
*G01N 21/31* (2006.01)  *G01N 21/35* (2006.01)
*G01N 21/84* (2006.01)

(21) Numéro de dépôt: 11189017.4

(22) Date de dépôt: 14.11.2011

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR
Etats d'extension désignés:
BA ME

(30) Priorité: 15.11.2010 FR 1059383

(71) Demandeur: Institut De Physique Du Globe De Paris
(Établissement Public À Caractère Scientifique Et Technologique)
75005 Paris (FR)

(72) Inventeurs:
• Frangi, Jean-Pierre
94800 Villejuif (FR)
• De Rosny, Gilles
75002 Paris (FR)
• Conejo, Elian
San José (CR)

(74) Mandataire: Kingolo, Alain et al
Pontet Allano & Associés
25, rue Jean Rostand
Parc Orsay Université
FR-91893 Orsay Cedex (FR)

(54) **Dispositif de radiométrie pour déterminer les caractéristiques physico-chimiques d'un échantillon en tenant compte de l'épaisseur**

(57) L'invention concerne un radiomètre pour déterminer le contenu biochimique d'une feuille végétale ou autre. Ce dispositif comprend :
- des moyens d'émission pour émettre de la lumière vers l'échantillon,
- des moyens de détection pour capter la lumière provenant dudit échantillon, les moyens de détection comprenant au moins un photodétecteur dit de transmittance pour capter le faisceau lumineux traversant l'échantillon,
- un capteur de position pour déterminer l'épaisseur de l'échantillon, et
- une unité de traitement pour déterminer les caractéristiques physico-chimiques dudit échantillon à partir de signaux de transmittance provenant des moyens de détection et d'une valeur de l'épaisseur de l'échantillon obtenue à partir du capteur de position.

FIG. 3

EP 2 453 221 A1

## Description

La présente invention concerne un dispositif de radiométrie pour déterminer les caractéristiques physico-chimiques d'un échantillon. Elle trouve une application particulièrement avantageuse dans la détermination de contenu biochimique de feuilles végétales. Toutefois, l'invention est d'un cadre plus large puisqu'elle peut naturellement s'appliquer à des domaines suivants :

- analyse d'un échantillon de viande, notamment pour déterminer la teneur en eau, protéine, lipide, collagène, sel... Les techniques actuelles basées sur des méthodes chimiques sont longues à mettre en oeuvre, complexes, intrusives et coûteuses.
- papier,
- tissu,
- ...

Dans des domaines d'application aussi variés que l'agriculture de précision, l'écologie à l'échelle globale ou la télédétection des ressources végétales pour comprendre le fonctionnement des écosystèmes, il est très important de connaître la composition biochimique des feuilles : essentiellement la chlorophylle a et b, l'eau et la matière sèche. Si une simple balance de précision et une étuve permettent de déterminer les teneurs en eau et en matière sèche, l'extraction et le dosage de la chlorophylle des feuilles font appel à des techniques de chimie analytique beaucoup plus complexes et coûteuses. Par ailleurs, ces techniques, toujours destructrices, sont difficiles à mettre en oeuvre lorsque le lieu d'expérimentation est éloigné du laboratoire d'analyse. En effet, une fois la feuille sectionnée, l'eau a tendance à s'évaporer rapidement et les chlorophylles tendent à se dégrader irrémédiablement. Tous ces facteurs limitent l'échantillonnage, et donc la représentativité des mesures.

On connaît notamment par l'article « Comparison of four radiative transfer models to simulate plant canopies reflectance : Direct and inverse mode » de S. Jacquemoud et al. , Remote Sens Environ. 74 :471-481 (2000), un modèle de propriétés optiques des feuilles PROSPECT qui requiert le paramètre de structure de la feuille, la quantité de chlorophylle, l'épaisseur d'eau équivalente et la quantité de matière sèche pour simuler la réflectance et la transmittance de feuilles dans le domaine optique.

L'article Ann.Chim.Fr 20 (1995) 491 de R.Vanderhaghen et al décrit un capteur optique en couche mince à sélectivité spectrale et son application à la mesure du trouble atmosphérique. Des détecteurs à sélectivité spectrale sont réalisés à partir d'empilements de diodes en silicium amorphe hydrogéné, polarisées à des tensions variables.

On connaît aussi un dispositif prévu pour des mesures in situ de la chlorophylle et des caroténoïdes d'une feuille, divulgué dans Proc.Int.Coll. « photosynthesis and remote sensing », Montpellier 28-31 Août 1995, de G. de Rosny et al. Ce dispositif est basé sur des mesures de réflectance ou de transmittance optique des feuilles dans la bande de longueur d'onde 400-1000 nm. La lumière réfléchie est mesurée par un empilement de semiconducteurs silicium-germanium hydrogénés amorphes, en tirant parti de leurs propriétés de photoconduction et de filtrage optique. Les propriétés optiques des feuilles sont calculées à partir de leurs teneurs en pigments en utilisant le modèle PROSPECT. La détermination des teneurs en pigments à partir des signaux collectés par le dispositif implique la résolution d'un problème inverse.

Le document US4395042, correspondant à un brevet américain délivré à Fuji Photo Film Co Ltd le 13 Octobre 1981, divulgue un procédé pour mesurer la chlorophylle dans des feuilles, dans lequel la lumière traversant la feuille est divisée en une composante de lumière de longueur d'onde plus courte dont l'intensité varie avec la quantité de chlorophylle et en une composante de longueur d'onde plus élevée dont l'intensité ne change pas avec la quantité de chlorophylle. Les valeurs respectives de ces deux composantes sont mesurées simultanément et leur différence est utilisée pour déterminer la quantité de chlorophylle contenue dans la feuille. Ce document divulgue également un appareil de mesure mettant en oeuvre ce procédé et pourvu de moyens de division spectroscopique pour diviser la lumière traversant la feuille.

Le document US6020587, correspondant à un brevet américain délivré à la National Aeronautics and Space Administration le 1er Février 2000, divulgue un appareil de mesure de la chlorophylle dans lequel on collecte de la lumière réfléchie d'une plante cible et on sépare la lumière ainsi collectée en deux bandes de longueur d'onde distinctes. Ces bandes de longueur d'onde présentent des longueurs d'onde centrales de 700 nm et 840 nm. La lumière collectée dans les deux canaux est traitée en utilisant des photodétecteurs et des amplificateurs.

On connaît aussi, notamment par le document JP1049941A, un appareil portatif de mesure de la chlorophylle construit par la société Minolta Co. Ltd et commercialisé sous la désignation « SPAD-505 Chlorophyll Meter » par la société Spectrum Technologies Inc. Cet appareil met en oeuvre une mesure de la transmittance d'une feuille pincée par un capteur, à 650 nm et 950 nm au moyen de deux diodes émettrices et d'une photodiode réceptrice. Un indice spectral est alors calculé à partir de ces deux valeurs de transmittance, permettant d'estimer la concentration en chlorophylle de la feuille au moyen d'une relation de calibrage préétablie par le constructeur.

Il existe dans l'état de la technique de nombreuses relations empiriques entre les propriétés optiques des feuilles et la teneur en tel ou tel constituant biochimique de ces feuilles. Toutefois, ces relations statistiques sont valables pour un nombre limité d'espèces en raison de l'influence de la structure anatomique des feuilles sur le signal réfléchi ou transmis, non seulement dans le proche infrarouge mais sur tout le spectre.

Le document WO03/006960 décrit un radiomètre pour déterminer in situ le contenu biochimique d'une feuille végétale. Ce radiomètre utilise les faisceaux lumineux de transmittance traversant la feuille pour déterminer le contenu biochimique au moyen de l'inverse du modèle de transfert radiatif PROSPECT.

La présente invention a pour but un radiomètre de précision capable d'estimer instantanément et simultanément le contenu biochimique d'un échantillon tel qu'une feuille végétale, une feuille de papier ou une découpe de viande. Un autre but de l'invention est la mise en oeuvre d'un dispositif non destructif capable de s'adapter au type d'échantillon mesuré.

On atteint au moins l'un des objectifs précitées avec un dispositif de radiométrie en transmission (proche uv, visible et proche ir, entre 350 et 1700 nm) pour déterminer des caractéristiques physico-chimiques d'un échantillon végétal ou animal ou papier ou tissu... , ce dispositif comprenant :

- des moyens d'émission pour émettre de la lumière vers l'échantillon,
  et
- des moyens de détection pour capter la lumière provenant dudit échantillon, les moyens de détection comprenant au moins un photodétecteur dit de transmittance pour capter le faisceau lumineux traversant l'échantillon.

Le dispositif selon l'invention comprend en outre un capteur de position pour déterminer l'épaisseur de l'échantillon, et une unité de traitement pour déterminer les caractéristiques physico-chimiques dudit échantillon à partir de signaux de transmittance provenant des moyens de détection et d'une valeur de l'épaisseur de l'échantillon obtenue à partir du capteur de position.

Avec le dispositif selon l'invention, on détermine les caractéristiques physico-chimiques à partir non seulement des signaux ayant traversés l'échantillon, mais également en considérant l'épaisseur de l'échantillon. Cela permet de déterminer avec une grande précision les caractéristiques physico-chimiques à partir de tableaux ou abaques prédéterminés ou par inversion d'un modèle de transfert radiatif connu et validé dont l'inversion est maîtrisée. Par exemple, le dispositif selon l'invention permet de réaliser une mesure simultanée de la chlorophylle, de l'eau et de la matière sèche de feuille d'une plante.

Une première façon de faire est d'utiliser un capteur de position comprenant un ensemble à deux parties coulissantes l'une par rapport à l'autre, les deux parties étant respectivement solidaires des moyens d'émission et des moyens de détection, la position étant repérée au moyen d'un faisceau lumineux ponctuel émis par l'une des parties et détecté par l'autre partie. Ce capteur constitue un détecteur de position optique qui peut être implanté dans la pince. En particulier, on peut utiliser une diode photoémissive éclairant un détecteur, la position du spot étant déterminée par mesure des photo-courants à chaque extrémité.

Une seconde façon de faire est d'utiliser un capteur de position comprenant un potentiomètre de précision intégré. Ce potentiomètre peut être intégré à l'endroit de pivot des deux bras de la pince. La position zéro ou position de référence peut être la position fermée de la pince, lorsque les deux têtes optiques sont en contact sans échantillon, le potentiomètre mesurant l'écartement relatif d'un bras par rapport à l'autre.

Le spectre de la lumière émise peut s'étaler du visible jusqu'à l'infrarouge. On peut utiliser des diodes électroluminescentes dites LED comme source de lumière. Avantageusement, les moyens d'émission comprennent plusieurs jeux de LED, chaque jeu de LED étant spécifique à un échantillon donné.

On peut ainsi optimiser le choix des jeux de LED par type de plante, de tissu ou de chair. De la même manière on peut prévoir plusieurs types de gestion électronique à mettre en oeuvre en fonction de LED utilisées. Le choix de LED peut se faire en sélectionnant électroniquement un jeu de LED parmi un groupe de LED fixes, ou bien un déplacement, par rotation par exemple, des moyens d'émission pour rendre opérationnel le jeu de LED souhaité. Lorsque les moyens de détection comprennent des photodétecteurs sélectifs, c'est-à-dire capable de capter uniquement une bande spectrale limitée, les LED peuvent émettre de façon séquentielle.

Par ailleurs, on prévoit au moins un diaphragme, disposé sur le trajet entre les deux têtes optiques, de préférence sur au moins l'une des deux têtes optiques, de façon à prendre en compte les dimensions de l'échantillon. On adapte l'ouverture du diaphragme par rapport à l'étendu de l'échantillon. On optimise ainsi la géométrie du système source-capteur (moyens d'émission et moyens de détection) pour la mesure de petits échantillons ou de feuilles de faible taille.

De préférence, les moyens de détection comprennent un photodétecteur à deux substrats Si/Ge pour capter plusieurs faisceaux lumineux de transmittance à différentes longueurs d'ondes. Cela peut consister en un empilement de photodétecteurs aptes à opérer chacun dans une bande spectrale différente.

Selon l'invention, les moyens de détection comprennent en outre au moins un photodétecteur dit de réflectance pour capter le faisceau lumineux réfléchi par l'échantillon, les signaux de réflectance étant également utilisés pour déterminer les caractéristiques physico-chimiques dudit échantillon.

Par ailleurs, pour obtenir les signaux de référence de réflectance, le dispositif comporte une lame de référence pour la réflectance, intégrée de façon rétractable. Cette lame peut être calibrée, en téflon et conçue de façon à réfléchir vers le photodétecteur de réflectance une lumière émise depuis les moyens d'émission.

Selon une caractéristique avantageuse de l'invention, les moyens d'émission comprennent des LED disposées en barillet, le photodétecteur de réflectance étant disposé au centre du barillet. Ainsi le photodétecteur de réflectance est disposé du côté des moyens d'émission. Les angles d'émission sont définis de façon à ce qu'une fraction de la lumière émise puis réfléchie par l'échantillon soit captée par ce photodétecteur de réflectance.

De préférence, le barillet est de forme conique de façon à ce que les axes de visée des LED convergent en un point de convergence situé entre l'échantillon et les moyens de détection.

Avantageusement, les moyens d'émission peuvent comprendre un concentrateur optique pour guider les faisceaux lumineux vers les moyens de détection. A titre d'exemple non limitatif, les moyens d'émission peuvent comprendre au moins quatre LED émettant dans des bandes spectrales centrées respectivement aux longueurs d'ondes 1050nm, 1450nm, 1550nm et 1650nm; les moyens de détection comprenant un photodétecteur de transmittance à base de silicium pour la réception aux longueurs d'onde ( entre 450 et 1200 nm pour le Si), un photodétecteur de transmittance à base de germanium pour la réception aux longueurs d'onde (entre 1000 et 2000 nm pour le Ge) et un photodétecteur de réflectance à base de germanium pour la réception des ondes réfléchies pour chaque faisceau émis. On peut envisager une cinquième LED dans le visible pour la mesure plus spécifique de la chlorophylle. On peut autrement envisager de disposer au moins une LED multispectrale capable d'émettre sur plusieurs bandes spectrales.

Selon une caractéristique avantageuse de l'invention, le dispositif comporte une pince équipée d'une première tête optique sur un premier bras et d'une seconde tête optique sur un second bras, la première tête optique contenant les moyens d'émission et le photodétecteur de réflectance ; la seconde tête optique contenant au moins le photodétecteur de transmittance ; les deux têtes optiques faisant face lorsque la pince est en position fermée. En particulier, la position fermée est une position de fonctionnement avec l'échantillon coincé entre les deux têtes optiques. Avec une telle pince, on obtient un radiomètre robuste, fiable et précis.

De préférence, au moins une tête optique comporte un rebord venant en contact avec l'autre tête optique lorsque la pince est en position fermée, ce rebord définissant une hauteur prédéterminée entre les deux bras ; lorsque la pince est en position fermée, ce rebord défini une enceinte fermée, notamment opaque, dans laquelle les deux têtes optiques se font face.

Une telle configuration permet d'obtenir des signaux de référence de transmittance qui serviront dans les calculs pour déterminer les caractéristiques physico-chimiques.

De préférence, lorsqu'on s'intéresse au contenu biochimique de plantes, l'unité de traitement peut être configurée pour déterminer le contenu biochimique d'une feuille en appliquant une inversion du modèle de transfert radiatif PROSPECT ou d'une base de données appropriée de comportement optique de la nature de l'échantillon.

Avantageusement, dans l'inversion de modèle de transfert radiatif on tient compte des données de réflexion et transmission provenant de la feuille ainsi que de l'épaisseur.

Plus précisément, l'inversion peut être basée sur la méthode des moindres carrés avec minimisation d'une fonction de mérite pour arriver à l'estimation de contenu biochimique tel que le paramètre de structure d'une feuille N, la masse superficielle de chlorophylle AB $C_{ab}$, la masse superficielle d'eau $C_w$ et la masse superficielle de matière sèche $C_m$.

Autrement, l'inversion peut être basée sur la mise en oeuvre d'un réseau de neurones pour arriver à l'estimation de contenu biochimique tel que la masse superficielle de chlorophylle AB $C_{ab}$, la masse superficielle d'eau $C_w$ et la masse superficielle de matière sèche $C_m$.

En complément notamment de ce qui précède, l'unité de traitement peut être intégrée dans la pince ou dans un module distant de la pince.

De façon générale, la mesure peut se faire in situ, c'est-à-dire directement sur le lieu où l'échantillon est disponible, notamment lorsque l'échantillon est une feuille d'une plante. Dans ce cas, le dispositif, qui peut être la pince, est portatif avec des moyens d'alimentation intégrés. En système embarqué, le calcul des caractéristiques physico-chimiques est réalisé dans la pince et le résultat peut être affiché sur un écran d'affichage. L'unité de traitement peut être un microcontrôleur, dont la partie logicielle est entièrement programmée dans le matériel dans une mémoire ROM, EPROM, EEPROM, FLASH... Le dispositif peut être intégré dans un appareil de communication portatif comme un « smartphone ».

Autrement, le dispositif peut être constitué d'une partie portable telle la pince intégrant une mémoire pour stocker des données et d'une partie distante telle un ordinateur intégrant l'unité de traitement.

Bien entendu, les différentes caractéristiques, formes et variantes de réalisation de l'invention peuvent être associées les unes avec les autres selon diverses combinaisons dans la mesure où elles ne sont pas incompatibles ou exclusives les unes des autres.

D'autres avantages et caractéristiques de l'invention apparaîtront à l'examen de la description détaillée d'un mode de mise en oeuvre nullement limitatif, et des dessins annexés, sur lesquels :

La figure 1 est une vue schématique simplifiée d'un appareil portatif selon l'invention,
La figure 2 est un schéma fonctionnel d'un exemple de réalisation d'un appareil portatif selon l'invention,
La figure 3 est une vue schématique simplifiée illustrant un peu plus en détail les têtes optiques intégrées dans un appareil selon de radiométrie selon l'invention,
La figure 4 est une vue schématique simplifiée illustrant un capteur de position optique,

La figure 5 est une vue schématique simplifiée illustrant un capteur de position à base de potentiomètre de précision,

La figure 6 est illustre le principe de radiométrie mis en oeuvre dans un dispositif selon l'invention,

La figure 7 est un schéma simplifié illustrant le mode opératoire d'une mesure de contenu biochimique d'une feuille selon l'invention,

La figure 8A illustre les étapes préalables de réalisation du module de traitement des signaux optiques captés par l'appareil portatif selon l'invention, et

La figure 8B illustre les étapes principales du procédé de détermination du contenu biochimique mis en oeuvre dans l'appareil portatif selon l'invention.

Bien que l'invention n'y soit pas limitée, on va maintenant décrire un appareil de radiométrie selon l'invention pour la mesure de contenu biochimique d'une feuille végétale.

Il s'agit d'un radiomètre portatif permettant de mesurer in situ instantanément et simultanément la concentration en chlorophylle, la teneur en eau et la teneur en matière sèche des feuilles de façon non destructive à partir de capteurs et récepteurs optiques spécifiques et d'une méthode d'inversion en système embarqué.

Pour que la manipulation du radiomètre selon l'invention soit rapide et aisée, ce radiomètre est conçu sous la forme d'une pince portative, mais d'autres formes sont envisageables. La lecture des résultats peut être directe ou différée après stockage de données dans le radiomètre. Un tel radiomètre s'utilise avantageusement dans le domaine de l'agriculture, tant pour l'agriculture de précision que pour l'amélioration de la qualité des cultures des pays émergents par exemple.

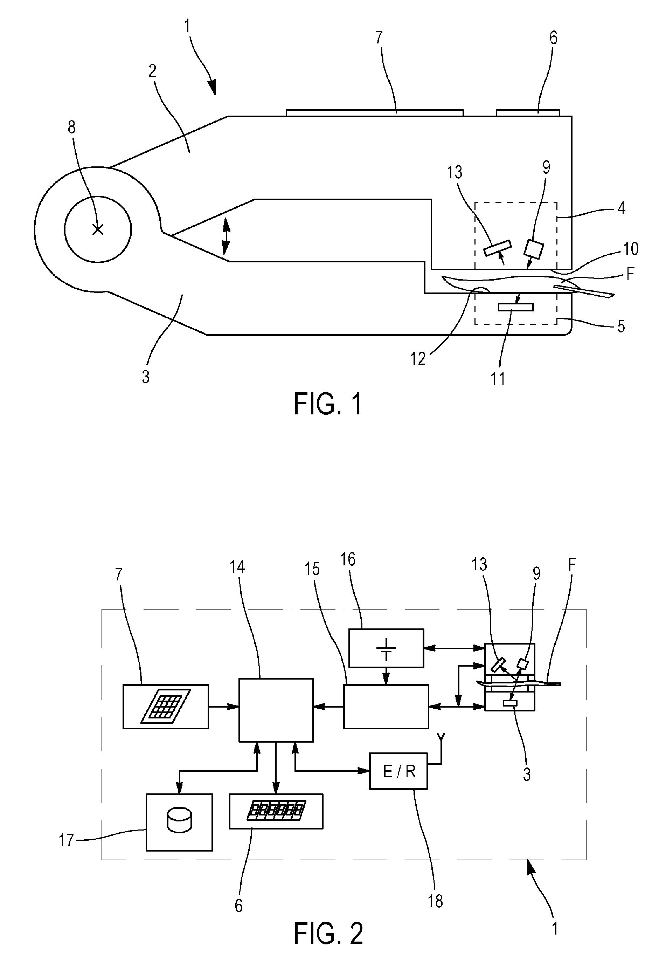

On va maintenant décrire, en référence à la figure 1, un exemple non limitatif de réalisation d'un radiomètre selon l'invention. Ce radiomètre est une pince 1 comportant un premier bras 2 avec à son extrémité une tête optique 4 comportant des moyens d'émissions et un moyen de détection. On distingue également un second bras 3 avec à son extrémité une tête optique 5 comportant uniquement des moyens de détection (réception). Les extrémités de la pince 1 sont conformées pour recevoir une feuille F à mesurer.

Le bras 2 comporte sur sa face supérieure un écran de visualisation 6 et un clavier de commande 7. Le bras 2 est mobile en rotation selon un axe de rotation 8 par rapport au bras 3. En particulier, la pince est pourvue de moyens de rappel qu'il faut forcer pour ouvrir la pince afin d'y insérer une feuille à mesurer.

La tête optique 4 du bras supérieur 2 inclut un dispositif d'éclairage 9 agencé pour délivrer, à travers la face de sortie 10 transparente de la tête optique 4, un flux lumineux dirigé vers la tête optique 5. Ce dernier inclut un photodétecteur 11 disposé de façon à être sensiblement en vis à vis du dispositif d'éclairage 9 lorsque la pince 1 est en position fermée. La tête optique 5 peut comprendre un hublot transparent 12.

Avantageusement, les moyens d'émission comprennent en outre un photodétecteur dit photodétecteur de réflectance 13 pour capter le faisceau lumineux réfléchi par la feuille F.

Le dispositif d'éclairage 9 est constitué de diodes électroluminescentes de différentes longueurs d'ondes.

Un appareil portatif 1 selon l'invention présente sur la figure 2, dans sa structure interne, un module électronique de mesure 15 associé aux moyens de détection 3 et 13, un module de contrôle et de traitement numérique 14 à base de circuit intégré tel qu'un microcontrôleur, un clavier de commande 7, un module d'affichage 6, une unité de stockage de données 17, un module de transmission 18 (non filaire ou filaire), et une source d'énergie autonome 16 comportant une pile ou une batterie pour alimenter les moyens d'émission 9 et l'ensemble des équipements électroniques et numériques de l'appareil portatif. La source d'énergie peut aussi être externe.

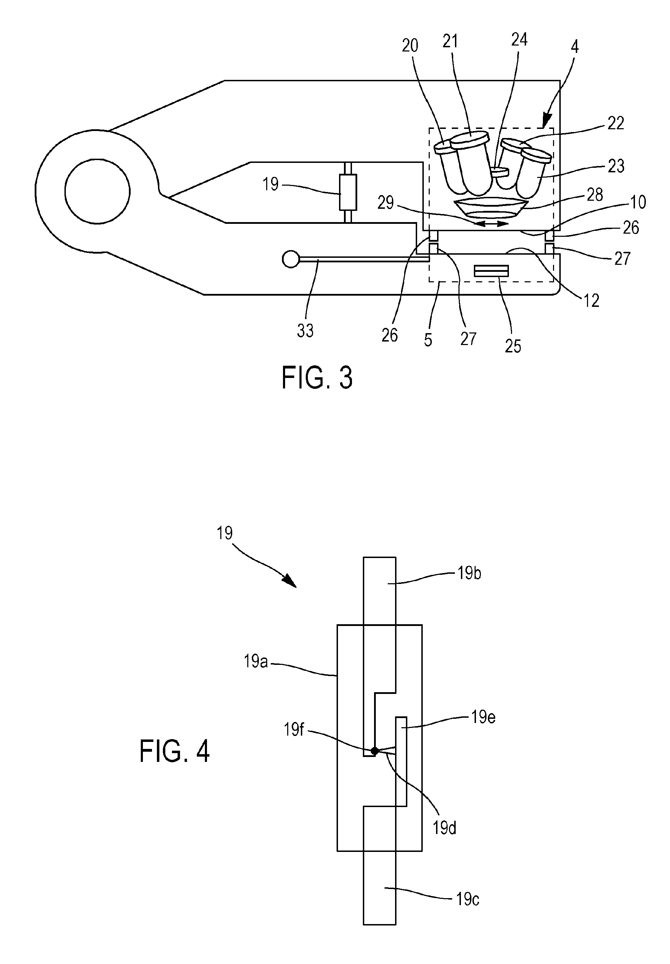

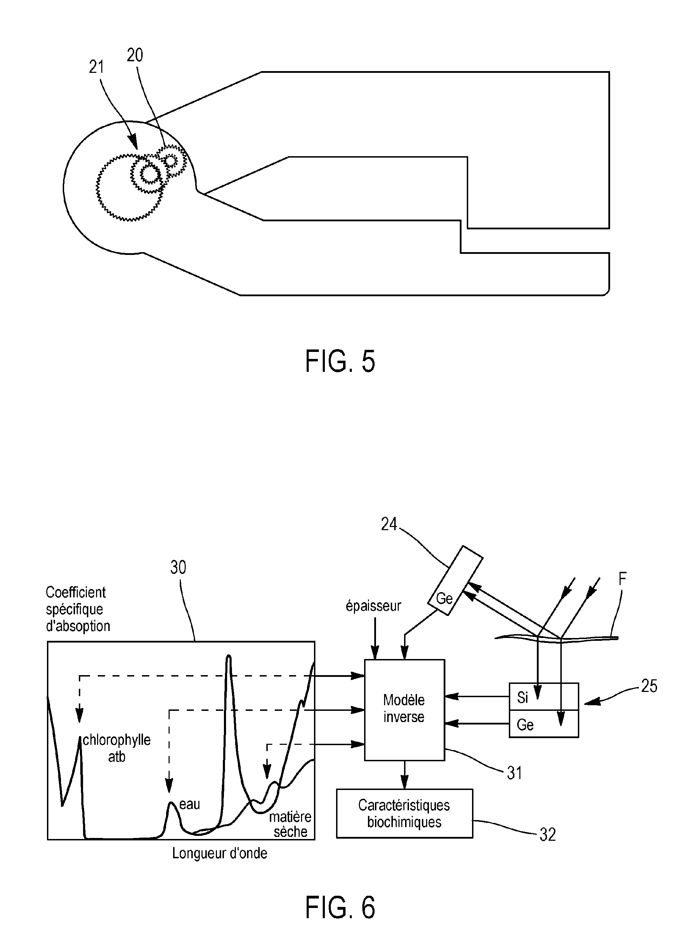

Sur la figure 3, on voit la pince 1 selon l'invention équipée d'un capteur de position 19 disposé entre les deux bras 2 et 3. Ce capteur 19 permet d'obtenir l'épaisseur de la feuille prise dans la pince en mesurant l'écartement entre ces deux bras. Sur la figure 4, on voit un peu plus en détail le capteur de position 19. Il comprend un corps 19a dans lequel coulisse un piston 19b solidaire du bras supérieur 2. Un piston 19c solidaire du bras inférieur 3 et d'un détecteur de position optique 19e. Une diode photoémissive 19f éclaire le détecteur de position optique 19e avec un faisceau ponctuel 19d. La position du spot est déterminée par mesure des photo-courants à chaque extrémité du détecteur de position. La figure 5 illustre un autre exemple de capteur de position comprenant un potentiomètre de précision 20 intégré dans la pince 1. Ce potentiomètre de précision 20 repère la position exacte relative des deux bras via un système d'engrenage 21.

Le capteur de position permet de déterminer l'épaisseur de l'échantillon qui interviendra lors de la détermination du contenu biochimique.

Sur la figure 3, on voit un mode de réalisation préféré des moyens d'émission et des moyens de détection selon l'invention. Ces moyens comprennent :

- cinq diodes électroluminescentes 20, 21, 22, 23 centrées respectivement sur 1050, 1450, 1550 et 1650 nm, et une cinquième diode électroluminescente 25 pour accéder à des informations dans une gamme inférieure entre 400 et 1000 nm par exemple. Cette cinquième diode électroluminescente opère à une longueur d'onde à déterminer en fonction du paramètre physico-chimique à observer. Par exemple, si l'on souhaite accéder à la mesure de chlorophylle on peut prendre une LED centrée entre 550 et 600 nm

- un détecteur photodiode à germanium (Ge) 24 en réflexion pour capter les faisceaux réfléchis par la feuille, et

- un détecteur à base de deux substrats Si/Ge 34 pour capter d'une part dans la photodiode constituée en silicium les faisceaux transmis dans le visible à travers la feuille, et d'autre part pour capter dans la photodiode constituée en germanium les faisceaux transmis dans l'infrarouge à travers la feuille. Cependant, compte tenu des spectres d'émission des quatre diodes électroluminescentes, ce détecteur Si/Ge peut être remplacé par un simple détecteur Ge.

Les cinq diodes électroluminescentes entourent le détecteur photodiode à germanium (Ge) 24, formant une sorte de barillet conique. Avantageusement, la pince 1 sur la figure 3 comporte un rebord supérieur 26 disposé à l'extérieur et le long de la face de sortie 10 de la tête optique 4. On distingue également un rebord inférieur 27 disposé à l'extérieur et le long du hublot 12 de la tête optique 5. Les deux rebords 26 et 27 présentent de préférence une même forme et sont conçus pour venir en contact l'un avec l'autre lorsque la pince est en position fermée. En fonctionnement, l'échantillon ou la feuille F est pincée entre les deux rebords 26 et 27. La tête optique 4 comprend un concentrateur optique 28 et un diaphragme 29 permettant de tenir compte des dimensions de l'échantillon. On règle le diaphragme 29 de façon à éviter qu'une partie du faisceau lumineux en émission soit hors de l'échantillon.

Les mesures effectuées avec et sans feuille permettent d'accéder aux transmittances et réflectances dans des intervalles de longueur d'onde appropriés à la détermination de paramètres biochimiques caractéristiques de la feuille : en particulier la teneur en eau (Cw), la teneur en matière sèche (Cm) et un paramètre de structure de la feuille (N). A 1050 nm la transmittance et la réflectance sont peu sensibles à l'eau et à la matière sèche, elles permettent donc de déterminer le facteur de structure de la feuille. A 1450nm et 1550nm, elles sont sensibles aux trois paramètres biochimiques, mais plus spécialement à la teneur en eau. A 1550 nm pour un fort contenu en eau, il se peut que la transmittance soit trop faible pour être correctement mesurée, à 1450 nm l'absorption est plus faible. A 1650 nm, la transmittance et la réflectance sont plus sensibles au contenu en matière sèche. La mesure par réflectance s'avère nécessaire pour la détermination précise du contenu en matière sèche, la transmittance seule ne suffisant pas. Le passage des mesures de transmittances et de réflectances aux paramètres biochimiques est réalisé, pour une feuille végétale notamment par inversion du modèle Prospect ou une autre méthode d'inversion, ou à partir de bases de données de comportement optique comme LOPEX ( voir notamment la publication de Hosgood, B., S. Jacquemoud, G. Andreoli, J. Verdebout, G. Pedrini, et G. Schmuck (1994), « Leaf Optical Properties EXperiment 93 (LOPEX93) », European Commission, Joint Research Centre, Institute for Remote Sensing Applications, Report EUR 16095) par exemple pour les feuilles.

Une méthodologie appropriée spécifique à l'inversion sera utilisée suivant l'environnement informatique de l'instrument, par exemple tables de scrutation, simplex, ou réseaux neuronaux.

Le principe du dispositif radiomètre selon l'invention est basé sur la dépendance du spectre de transmission et de réflexion optique d'une feuille avec sa constitution biochimique. L'étude des propriétés optiques des feuilles - réflectance, transmittance et absorptance - a depuis longtemps montré que ces propriétés optiques dépendaient principalement de deux facteurs : leur structure anatomique et leur composition biochimique. Les effets de ces facteurs varient en fonction du domaine de longueur d'onde: le visible (400-700 nm) se caractérise par une forte absorption de la lumière par les pigments chlorophylliens qui participent à la photosynthèse ; le proche infrarouge (700-1200 nm) est au contraire très peu sensible à la composition biochimique de la feuille mais informatif sur sa structure anatomique ; enfin le rayonnement moyen infrarouge (1200-2500 nm) est absorbé par l'eau et, dans une moindre mesure, par la matière sèche qui représente entre 10 et 40% du poids frais de la feuille.

Sur la figure 6, on voit un exemple de mise en oeuvre d'un procédé selon l'invention. Au préalable, on considère l'inverse d'un modèle de transfert radiatif, ce modèle étant établi à partir des caractéristiques biochimiques des feuilles, notamment à partir de la courbe 30 illustrant le coefficient spécifique d'absorption en fonction de la longueur d'onde. Les signaux de transmittance générés par le photodétecteur 34 et de réflectance générés par le photodétecteur 24 sont filtrés et traités puis convertis sous forme de données numériques au sein du module électronique 15 de la figure 2. Ces données numériques sont ensuite traitées par un programme stocké dans le microcontrôleur 14 et implémentant des relations issues de l'inversion du modèle PROSPECT de propriétés optiques des feuilles.

Le modèle inverse 31 sur la figure 6 reçoit également l'épaisseur de la feuille. Le résultat en 32 est la délivrance des caractéristiques biochimiques.

Selon une caractéristique avantageuse de l'invention, on peut utiliser plusieurs pinces communiquant entre elles et/ou avec une unité de traitement distante apte à récupérer plusieurs mesures. On couvre ainsi une grande zone de travail. Chaque pince est alors équipée de moyens d'émission/réception avec ou sans fil et de moyens pour identifier chaque pince parmi d'autres. Par ailleurs, chaque pince peut être équipée d'un module GPS de façon à repérer chaque pince dans la zone de travail.

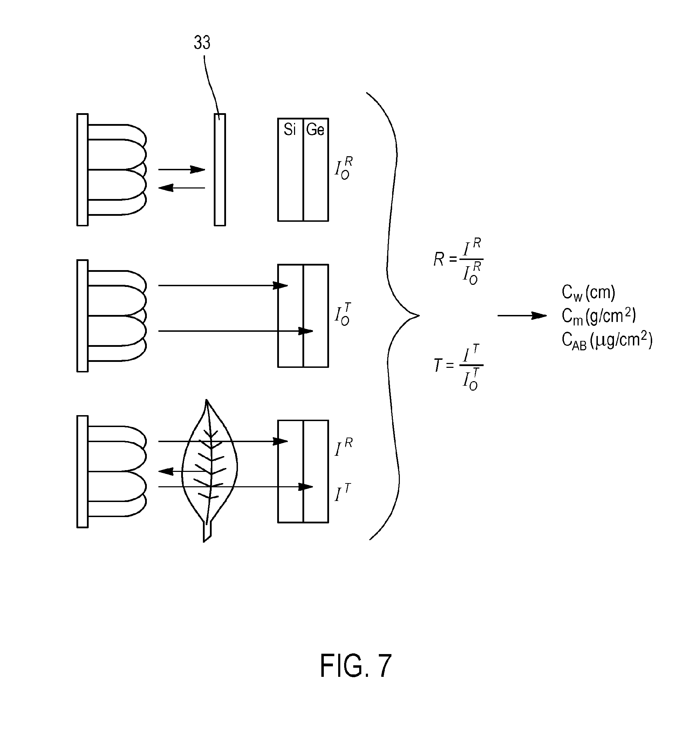

Sur la figure 7 est décrit un mode opératoire de détermination de caractéristiques biochimiques selon l'invention. La première étape consiste à déterminer les signaux de référence pour la réflectance. Pour ce faire, on intercale une lame rétractable 33 en téflon par exemple (représentée sur la figure 3) entre la tête optique 4 et la tête optique 5, puis chaque diode électroluminescente 20, 21, 22, 23 et 25 émet de façon successive un faisceau de lumière qui est réfléchi par la lame rétractable 33. Le photodétecteur 24 récupère un signal de référence pour chaque faisceau de lumière, donc chaque longueur d'onde. Ces signaux sont ensuite convertis en données numériques puis stockées par le microcontrôleur, il s'agit d'un $I_0^R$ pour chaque longueur d'onde émis par les moyens d'émission (550nm, 1050 nm, 1450nm, 1550nm, et 1650 nm).

La seconde étape consiste à déterminer les signaux de référence pour la transmittance. Pour ce faire, sans la feuille, on met la pince 1 en position fermée où les deux rebords sont en contact et forment un espace fermé, de préférence opaque à la lumière extérieure (voir figure 3). Chaque diode électroluminescente 20, 21, 22, 23 et 25 émet ensuite de façon successive un faisceau de lumière qui est directement capté par le photodétecteur 34. Les signaux récupérés sont ensuite convertis en données numériques puis stockés par le microcontrôleur, il s'agit de $I_0^T$ pour chaque longueur d'onde émis par les moyens d'émission (550nm, 1050 nm, 1450nm, 1550nm, et 1650 nm). En particulier, le photodétecteur en silicium est utilisé pour capter les faisceaux lumineux dans le visible et le proche infrarouge, le photodétecteur en germanium étant utilisé pour capter les faisceaux lumineux dans le moyen infrarouge.

La troisième étape est l'étape de mesure dans laquelle on intercale une feuille entre les rebords 26 et 27, puis on émet successivement chaque faisceau lumineux des diodes électroluminescentes (DEL) 20, 21, 22, 23 et 25. Les LED éclairent l'échantillon successivement. Les diodes électroluminescentes sont allumées pendant environ 200 µs, l'une après l'autre. Les données sont stockées puis elles sont moyennées suivant la cadence d'échantillonnage (nombre de mesures réalisées par LED) choisie en général entre 20 et 100 mesures par seconde. En prenant en compte la vitesse de la carte (50000 échantillons/s), le temps passé pour scruter chaque diode est inférieur à la seconde. Pour éviter l'échauffement des diodes et la dérive du spectre d'émission qui en découle, les LED sont allumées pendant un temps aussi court que possible compatible avec la procédure de numérisation. Pour une mesure sur échantillon, l'ensemble de la procédure prend environ 1 seconde. On capte par les photodétecteurs 34 et 24 les faisceaux transmis et les faisceaux réfléchis, il s'agit des signaux $I^T$ et $I^R$. Ensuite on applique l'inversion du modèle PROSPECT à partir de la réflectance $R = \dfrac{I^R}{I_0^R}$ et de la transmittance $T = \dfrac{I^T}{I_0^T}$.

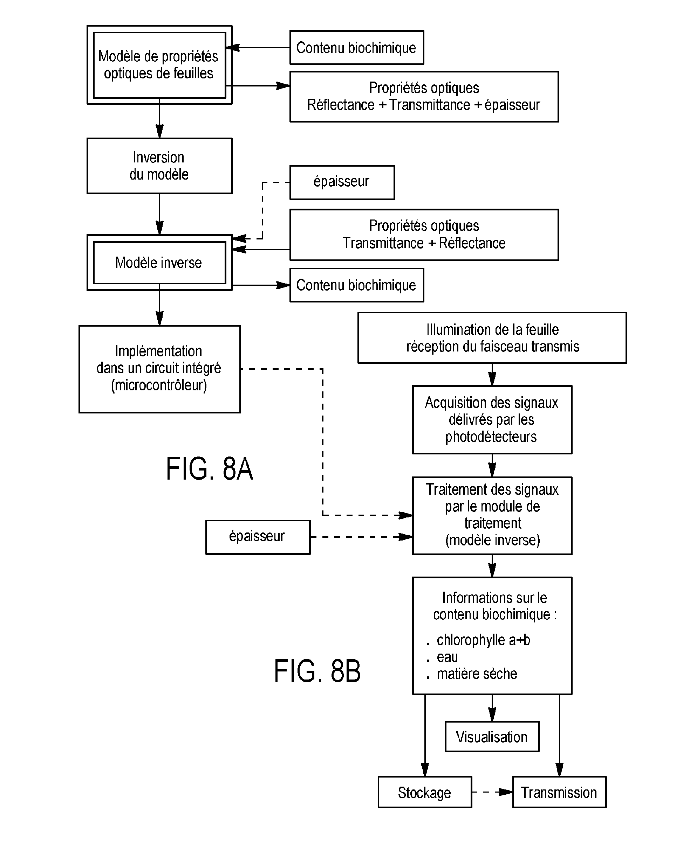

Ce modèle est aujourd'hui largement utilisé en télédétection des ressources terrestres. Il calcule la réflectance et la transmittance spectrale d'une feuille verte en fonction d'un paramètre de structure N et des concentrations en chlorophylle, eau et matière sèche. En inversion, on peut donc estimer ces paramètres, par exemple à partir des signaux captés par les photodiodes. Le modèle PROSPECT a été préalablement inversé en utilisant par exemple un réseau de neurones puis les formules résultant de cette inversion ont été inscrites dans une zone de mémoire du microcontrôleur, en référence à la figure 8A.

Le modèle PROSPECT peut aussi être mis en oeuvre pour sélectionner la configuration optimale des bandes spectrales (nombre, position et largeur) du dispositif de radiométrie selon l'invention. Cette configuration optimale peut être sélectionnée en fonction d'impératifs techniques mais aussi par une analyse de sensibilité du modèle via des plans d'expériences numériques. Ces derniers, couramment utilisés dans l'industrie où l'acquisition de connaissances est basée sur la réalisation d'essais, sont désormais appliqués en modélisation afin d'extraire une information quantitative à partir d'un nombre limité de simulations.

Le procédé de détermination de la composition biochimique d'une feuille comporte, en référence à la figure 8B, une étape d'illumination un jeu de LED et de réception des faisceaux transmis à travers l'épaisseur de la feuille et des faisceaux réfléchis par la feuille, une étape d'acquisition des signaux électriques délivrés par les photodétecteurs, une étape de traitement de ces signaux par le module de traitement intégrant le modèle inverse, une étape de fourniture par ce module de traitement des informations sur la teneur en chlorophylle a+b, en eau et en matière sèche, et des étapes sélectives de visualisation, de stockage dans une mémoire tampon au sein de l'appareil portatif ou de télétransmission par filaire ou non filaire.

On va maintenir décrire, en référence aux figures précitées, un exemple de mise en oeuvre et d'utilisation d'un appareil portatif selon l'invention. Lors de la fabrication de l'appareil, le microcontrôleur 14 a été programmé pour exécuter un ensemble de fonctions représentatives de l'inversion du modèle PROSPECT et obtenues à partir d'un réseau de neurones.

En utilisation, l'opérateur tenant dans l'une de ses mains l'appareil portatif 1 selon l'invention approche celui-ci d'une feuille F dont il a choisi de déterminer le contenu biochimique et pince cette feuille. Il lance alors une séquence de mesure, en entrant par exemple une commande sur le clavier 7. Les signaux délivrés par les photodétecteurs sont immédiatement traités pour fournir un ensemble d'informations sur le contenu biochimique de la feuille directement exploitables et affichables sur l'écran 6, par exemple sous la forme d'un menu déroulant dans lequel chaque information est successivement affichée. L'opérateur peut aussi commander un stockage des informations de contenu biochimique avec horodatage et localisation dans l'unité de stockage 17 de l'appareil portatif 1. Une transmission par voie non filaire, par exemple via un module de radiocommunication 18 ou via un module de communication mobile, peut aussi être prévue.

Il existe de nombreux modèles de feuilles connus de l'homme du métier :

Les modèles de couches :

Ils représentent la feuille comme une ou plusieurs couches identiques, parallèles, séparées par des couches d'air. Ces couches sont constituées d'éléments diffusants et absorbants distribués aléatoirement : on parle de milieu « continu » ou « turbide ». Un indice de réfraction et un coefficient d'absorption suffisent donc à reproduire les propriétés optiques d'une couche élémentaire et la résolution du système de Stokes (1862) permet de généraliser ce calcul à N couches. Le paramètre N représente alors la structure interne de la feuille. Le modèle PROSPECT aujourd'hui largement diffusé dans la communauté scientifique est conçu sur ce principe. Voir notamment la publication Jacquemoud S. et Baret F. (1990). "PROSPECT: a model of leaf optical properties spectra", Remote Sensing of Environment, 34: 75-91.

Les modèles à N flux :

Ils découlent de la théorie de Kubelka-Munk qui consiste à résoudre un système d'équations différentielles linéaires régissant le transport des flux lumineux (ascendant, montant, spéculaire, diffus, etc.) en fonction des coefficients d'absorption k et de diffusion s de la feuille. L'épaisseur de la feuille doit être connue en plus de ces deux coefficients. On peut citer la référence suivante :

Allen W.A. et Richardson A.J. (1968). "Interaction of light with a plant canopy", Journal of the Optical Society of America, 58(8):1023-1028.

Les modèles résolvant les équations du transfert radiatif :

Ils ne simplifient pas les équations du transfert radiatif mais le peu d'informations disponibles sur la structure anatomique des feuilles et la distribution des absorbeurs conduit à d'autres simplifications qui rendent cette approche moins précise que les modèles plus « simples ». On peut citer le modèle LEAFMOD (« Leaf Experimental Absorptivity Feasibility MODel ») qui a été couplé à un modèle de réflectance des couverts. On peut notamment citer la publication suivante : Ganapol B.D., Johnson L.F., Hammer P.D., Hlavka C.A. et Peterson D.L. (1998). "LEAFMOD: a new within-leaf radiative transfer model", Remote Sensing of Environment, 63(2):

182-193.

Les modèles de lancer de rayons :

Ils représentent la propagation des photons à l'intérieur d'une feuille de façon très précise. Ils requièrent une description détaillée de la structure interne des feuilles telle qu'on l'observe au microscope et la connaissance de l'indice de réfraction et des coefficients d'absorption spécifiques des principales molécules présentes dans la feuille. Les loi de l'optique géométrique permettent alors de suivre le trajet optique des photons virtuels incidents sur une maquette 2D avec, par exemple, les modèles ABM (Algorithmic BDF Model) et FSM (Foliar Scattering Model) ou 3D (Govaerts et al., 1996 ; Ustin et al., 2001) avec le modèle RAYTRAN. On peut citer la référence suivante :

Kumar R. et Silva L. (1973). "Light ray tracing through a leaf cross section", Applied Optics, 12 (12):2950-2954.

Bien sûr, l'invention n'est pas limitée aux exemples qui viennent d'être décrits et de nombreux aménagements peuvent être apportés à ces exemples sans sortir du cadre de l'invention. En particulier, on peut prévoir, pour un appareil portatif selon l'invention, bien d'autres agencements que ceux représentés sur les figures de la description. L'appareil selon l'invention peut s'appliquer à de nombreuses applications, parmi lesquelles le contrôle de la qualité par un contrôle en ligne pour la caractérisation de la viande rouge et de la viande blanche. Pour tout échantillon non végétal, tel que le tissu humain pour des applications médicales (par ex. la peau artificielle), contrôle de qualité dans le domaine des cosmétiques, de l'ophtalmologie (lentilles), il est aisé pour l'homme du métier d'envisager une méthode d'inversion. Notamment, pour les tissus, à partir de base de données issues de mesures sur les caractéristiques des différents tissus, on peut mettre en oeuvre une méthode d'inversion par réseau de neurone et inverser ensuite.

De façon générale, au lieu et place de la méthode d'inversion, il est possible d'utiliser des abaques ou des fonctions ou des relations issues de mesures d'étalonnage avec des standard (pour l'eau et la matière sèche par exemple, il s'agit de pesée avant et après séchage à l'étuve ; pour la chlorophylle, il s'agit de mesure par fluorimétrie. Il y a aussi des tables de scrutation issues de bases de données.

Le capteur de position selon l'invention permet de fournir l'épaisseur de l'échantillon. C'est une fonction supplémentaire aux fonctions optiques de la pince qui permet de mieux déterminer la position de l'échantillon relativement aux diodes émettrices et réceptrices et d'en tenir compte dans le calcul des transmittances et des réflectances notamment. De plus, la connaissance de $C_w$ et de $C_m$ permet de déterminer la masse surfacique de matière sèche et avec la mesure d'épaisseur de la feuille, la densité apparente de matière sèche, caractéristique de la structure foliaire. D'où une amélioration dans la détermination du paramètre de structure N.

On peut également envisager une pince robotique sous forme d'une tige notamment télescopique, mais pas obligatoirement. Cette tige est équipée à son extrémité de deux bras de type 2 et 3 sur la figure 1, mais avec un déplacement en translation et en opposition l'un face à l'autre, et non en pivot comme sur la figure 1. Les deux bras sont équipés de moyens d'émission, de détection et de traitement comme mentionnés ci-dessus. Un dispositif de mesure de l'épaisseur est également intégré.

## Revendications

1. Dispositif de radiométrie pour déterminer des caractéristiques physico-chimiques d'un échantillon, ce dispositif comprenant :

   - des moyens d'émission pour émettre de la lumière vers l'échantillon,
   - des moyens de détection pour capter la lumière provenant dudit échantillon, les moyens de détection comprenant au moins un photodétecteur dit de transmittance pour capter le faisceau lumineux traversant l'échantillon, et
   - un capteur de position pour déterminer l'épaisseur de l'échantillon, **caractérisé en ce qu'**il comprend en outre une unité de traitement pour déterminer les caractéristiques physico-chimiques dudit échantillon à partir de signaux de transmittance provenant des moyens de détection et d'une valeur de l'épaisseur de l'échantillon obtenue à partir du capteur de position, cette unité de traitement étant configurée pour déterminer le contenu biochimique d'une feuille végétale en appliquant une inversion du modèle de transfert radiatif PROSPECT ou d'une base de données appropriée de comportement optique de la nature de l'échantillon.

2. Dispositif selon la revendication 1, **caractérisé en ce que** le capteur de position comprend un ensemble à deux parties coulissantes l'une par rapport à l'autre, les deux parties étant respectivement solidaires des moyens d'émission et des moyens de détection, la position étant repérée au moyen d'un faisceau lumineux ponctuel émis par l'une des parties et détecté par l'autre partie.

3. Dispositif selon la revendication 1, **caractérisé en ce que** le capteur de position comprend un potentiomètre de précision intégré.

4. Dispositif selon l'une quelconque des revendications précédentes, **caractérisé en ce que** les moyens d'émission comprennent plusieurs jeux de diodes électroluminescentes dites LED, chaque jeu de LED étant spécifique à un échantillon donné.

5. Dispositif selon l'une quelconque des revendications précédentes, **caractérisé en ce qu'**il comprend au moins un diaphragme de façon à prendre en compte les dimensions de l'échantillon.

6. Dispositif selon l'une quelconque des revendications précédentes, **caractérisé en ce que** les moyens de détection comprennent un photodétecteur à deux substrats Si/Ge pour capter plusieurs faisceaux lumineux de transmittance à différentes longueurs d'ondes.

7. Dispositif selon l'une quelconque des revendications précédentes, **caractérisé en ce que** les moyens de détection comprennent en outre au moins un photodétecteur dit de réflectance pour capter le faisceau lumineux réfléchi par l'échantillon, les signaux de réflectance étant également utilisés pour déterminer les caractéristiques physico-chimiques dudit échantillon.

8. Dispositif selon l'une quelconque des revendications précédentes, **caractérisé en ce qu'**il comporte une lame de référence pour la réflectance, intégrée de façon rétractable.

9. Dispositif selon la revendication 8, **caractérisé en ce que** les moyens d'émission comprennent des LED disposées en barillet, le photodétecteur de réflectance étant disposé au centre du barillet.

10. Dispositif selon la revendication 9, **caractérisé en ce que** le barillet est de forme conique de façon à ce que les axes de visée des LED convergent en un point de convergence situé entre l'échantillon et le photodétecteur de transmittance.

11. Dispositif selon l'une quelconque des revendication 8 à 10, **caractérisé en ce que** les moyens d'émission comprennent au moins quatre LED émettant dans des bandes spectrales centrées respectivement aux longueurs d'ondes 1050nm, 1450nm, 1550nm et 1650nm; les moyens de détection comprenant un photodétecteur de transmittance à base de silicium pour la réception aux longueurs d'onde entre 450 et 1200 nm, un photodétecteur de transmittance à base de germanium pour la réception aux longueurs d'onde entre 1000 et 2000 nm et un photodétecteur de réflectance à base de germanium pour la réception des ondes réfléchies.

12. Dispositif selon l'une quelconque des revendications 8 à 11, **caractérisé en ce qu'**il comporte une pince équipée d'une première tête optique sur un premier bras et d'une seconde tête optique sur un second bras, la première tête optique contenant les moyens d'émission et le photodétecteur de réflectance ; la seconde tête optique contenant au moins le photodétecteur de transmittance ; les deux têtes optiques faisant face lorsque la pince est en position fermée.

13. Dispositif selon la revendication 12, **caractérisé en ce qu'**au moins une tête optique comporte un rebord venant en contact avec l'autre tête optique lorsque la pince est en position fermée, ce rebord définissant une distance prédéterminée entre les deux têtes optiques ; lorsque la pince est en position fermée, ce rebord définit une enceinte fermée dans laquelle les deux têtes optiques se font face.

14. Dispositif selon l'une quelconque des revendications précédentes, **caractérisé en ce que** l'unité de traitement est intégrée dans la pince ou dans un module distant de la pince.

FIG. 1

FIG. 2

## FIG. 3

## FIG. 4

FIG. 5

FIG. 6

FIG. 7

Modèle de propriétés optiques de feuilles ← Contenu biochimique

Modèle de propriétés optiques de feuilles → Propriétés optiques
Réflectance + Transmittance + épaisseur

Inversion du modèle

épaisseur

Propriétés optiques
Transmittance + Réflectance

Modèle inverse → Contenu biochimique

Implémentation dans un circuit intégré (microcontrôleur)

**FIG. 8A**

Illumination de la feuille
réception du faisceau transmis

Acquisition des signaux délivrés par les photodétecteurs

épaisseur

Traitement des signaux par le module de traitement (modèle inverse)

Informations sur le contenu biochimique :

. chlorophylle a+b
. eau
. matière sèche

**FIG. 8B**

Visualisation

Stockage - - → Transmission

Europäisches
Patentamt
European
Patent Office
Office européen
des brevets

**RAPPORT DE RECHERCHE EUROPEENNE**

Numéro de la demande

EP 11 18 9017

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | US 7 660 698 B1 (SEELIG HANS-DIETER [US] ET AL) 9 février 2010 (2010-02-09)<br>* colonne 7, ligne 5 - ligne 14 *<br>* colonne 11, ligne 32 - ligne 43 *<br>* colonne 11, ligne 62 - colonne 12, ligne 15 *<br>* colonne 14, ligne 11 - colonne 15, ligne 42 *<br>* figures 1-4 * | 1-14 | INV.<br>G01N21/31<br><br>ADD.<br>G01N21/35<br>G01N21/84 |
| A | US 6 185 833 B1 (BRAVDO BEN-AMI [IL] ET AL) 13 février 2001 (2001-02-13)<br>* colonne 2, ligne 61 - ligne 67 * | 3 | |
| A | JP 8 015141 A (SATAKE ENG CO LTD) 19 janvier 1996 (1996-01-19)<br>* abrégé; figures 1,4 * | 4,7 | |
| Y | CONEJO E ET AL: "Biophotonic in situ sensor for plant leaves", APPLIED OPTICS, OPTICAL SOCIETY OF AMERICA,<br>vol. 49, no. 10, 1 avril 2010 (2010-04-01), pages 1687-1697, XP001553079,<br>ISSN: 0003-6935<br>[extrait le 2010-03-22]<br>* le document en entier *<br>* page 1688, colonne de droite, alinéa 3 - page 1689, colonne de gauche, alinéa 3 * | 1-14 | DOMAINES TECHNIQUES RECHERCHES (IPC)<br><br>G01N |
| A | US 3 910 701 A (HENDERSON GEORGE R ET AL) 7 octobre 1975 (1975-10-07)<br>* figures 1-3 *<br>* colonne 4, ligne 47 - colonne 5, ligne 13 *<br>* figure 5 * | 9,10 | |

-/--

Le présent rapport a été établi pour toutes les revendications

| Lieu de la recherche | Date d'achèvement de la recherche | Examinateur |
|---|---|---|
| La Haye | 30 décembre 2011 | Verdoodt, Erik |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 11 18 9017

| | **DOCUMENTS CONSIDERES COMME PERTINENTS** | | |
|---|---|---|---|
| Catégorie | Citation du document avec indication, en cas de besoin, des parties pertinentes | Revendication concernée | CLASSEMENT DE LA DEMANDE (IPC) |
| A | US 5 859 435 A (SATAKE SATORU [JP] ET AL) 12 janvier 1999 (1999-01-12) * figures 3,5,6 * ----- | 13 | |
| A | EP 1 615 017 A1 (YOKOHAMA ELECTRONIC COMM & SOL [JP]) 11 janvier 2006 (2006-01-11) * le document en entier * ----- | 1 | |
| | | | **DOMAINES TECHNIQUES RECHERCHES (IPC)** |

Le présent rapport a été établi pour toutes les revendications

| Lieu de la recherche | Date d'achèvement de la recherche | Examinateur |
|---|---|---|
| La Haye | 30 décembre 2011 | Verdoodt, Erik |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
...........................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 11 18 9017

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-12-2011

| Document brevet cité au rapport de recherche | | Date de publication | Membre(s) de la famille de brevet(s) | | Date de publication |
|---|---|---|---|---|---|
| US 7660698 | B1 | 09-02-2010 | AUCUN | | |
| US 6185833 | B1 | 13-02-2001 | AUCUN | | |
| JP 8015141 | A | 19-01-1996 | AUCUN | | |
| US 3910701 | A | 07-10-1975 | AUCUN | | |
| US 5859435 | A | 12-01-1999 | AU | 712635 B2 | 11-11-1999 |
| | | | CN | 1180839 A | 06-05-1998 |
| | | | JP | 3436093 B2 | 11-08-2003 |
| | | | JP | 10096692 A | 14-04-1998 |
| | | | US | 5859435 A | 12-01-1999 |
| EP 1615017 | A1 | 11-01-2006 | EP | 1615017 A1 | 11-01-2006 |
| | | | KR | 20060043446 A | 15-05-2006 |
| | | | US | 2006007443 A1 | 12-01-2006 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4395042 A
- US 6020587 A
- JP 1049941 A
- WO 03006960 A

**Littérature non-brevet citée dans la description**

- **S. JACQUEMOUD et al.** Comparison of four radiative transfer models to simulate plant canopies reflectance : Direct and inverse mode. *Remote Sens Environ,* 2000, vol. 74, 471-481
- **R.VANDERHAGHEN.** *Ann.Chim.Fr,* 1995, vol. 20, 491
- **G. DE ROSNY.** photosynthesis and remote sensing. *Proc.Int.Coll.,* 28 Août 1995
- Leaf Optical Properties EXperiment 93 (LOPEX93. **HOSGOOD, B. ; S. JACQUEMOUD ; G. ANDREOLI ; J. VERDEBOUT ; G. PEDRINI ; G. SCHMUCK.** Report EUR 16095. Institute for Remote Sensing Applications, 1994
- **JACQUEMOUD S. ; BARET F.** PROSPECT: a model of leaf optical properties spectra. *Remote Sensing of Environment,* 1990, vol. 34, 75-91
- **ALLEN W.A. ; RICHARDSON A.J.** Interaction of light with a plant canopy. *Journal of the Optical Society of America,* 1968, vol. 58 (8), 1023-1028
- **GANAPOL B.D. ; JOHNSON L.F. ; HAMMER P.D. ; HLAVKA C.A. ; PETERSON D.L.** LEAFMOD: a new within-leaf radiative transfer model. *Remote Sensing of Environment,* 1998, vol. 63 (2), 182-193
- **KUMAR R. ; SILVA L.** Light ray tracing through a leaf cross section. *Applied Optics,* 1973, vol. 12 (12), 2950-2954